# EUROPÄISCHE PATENTANMELDUNG

(11) **EP 2 837 467 A1**
(43) Veröffentlichungstag der Anmeldung: **18.02.2015**
(21) Anmeldenummer: 14181212.3
(22) Anmeldetag: 18.08.2014
(51) Int. Cl.: B25B 5/10, F16H 25/20, B23B 31/12, B23B 31/175, B23B 31/177, B23B 31/28

(54) **Spanneinheit, insbesondere zur Verwendung in einem Bearbeitungszentrum bzw. einem Dreh- bzw. Fräszentrum**

(30) Priorität: 16.08.2013 EP 13180673
(71) Anmelder: SMW-AUTOBLOK Spannsysteme GmbH, 88074 Meckenbeuren (DE)
(72) Erfinder: Deininger, Harald, D-88048 Friedrichshafen (DE); Maurer, Eckhard, D-88094 Oberteuringen (DE)
(74) Vertreter: Zech, Stefan Markus

(57) **Zusammenfassung**

Spanneinheit, insbesondere zur Verwendung in einem Bearbeitungszentrum bzw. einem Dreh- bzw. Fräszentrum, wobei die Spanneinheit ein Außengehäuse (12) von vorzugsweise zylindrischer Grundform, ein im Außengehäuse (12) aufgenommenes Innengehäuse (15) sowie einen im Innengehäuse (15) in einer im Betriebszustand vertikalen Stellrichtung A verstellbar gehaltenen Innenzylinder (11), der dazu ausgebildet ist, eine Druck- oder Zugkraft zu Spannzwecken zu übertragen, umfasst, wobei sich das Innengehäuse (15) über Federn (13, 14) gegen das Außengehäuse (12) abstützt und in Stellrichtung A gegenüber dem Außengehäuse (12) verschieblich gelagert ist und so einen Federkraftspeicher (21) ausbildet, wobei innerhalb der Spanneinheit integriert, vorzugsweise vom Außengehäuse (12) umschlossen, weiter vorzugsweise innerhalb des Innengehäuses (11) aufgenommen, Getriebemittel (17-20) angeordnet sind, um, angetrieben von einer Antriebsvorrichtung (16), den Innenzylinder (11) mit einer Kraft in Stellrichtung A zu beaufschlagen und wobei sich das Innengehäuse (15) über eine Mehrzahl von Federn (13, 14) unterschiedlicher Bauart, insbesondere über ein oder mehrere Spiralfedern (13) und über ein oder mehrere Gasdruckfedern (14) am Außengehäuse (12) abstützt.

## Beschreibung

Die Erfindung betrifft eine Spanneinheit, insbesondere zur Verwendung in einem Bearbeitungszentrum bzw. einem Dreh- bzw. Fräszentrum, wobei die Spanneinheit ein Außengehäuse von vorzugsweise zylindrischer Grundform ein im Außengehäuse aufgenommenes Innengehäuse sowie einen im Innengehäuse in einer im Betriebszustand vertikalen Stellrichtung A verstellbar gehaltenen Innenzylinder, der dazu ausgebildet ist, eine Druck- oder Zugkraft zu Spannzwecken zu übertragen, umfasst nach den Merkmalen des Anspruchs 1.

Aus dem Stand der Technik sind bereits Spanneinheiten zur Verwendung in einem Bearbeitungszentrum bzw. einem Dreh- bzw. Fräszentrum bekannt, die ein zu bearbeitendes Werkstück relativ rasch und zuverlässig einzuspannen in der Lage sind.

Gegenüber dem Stand der Technik besteht die Aufgabe darin, eine Spanneinheit bereitzustellen, die hinsichtlich der Aufbringung und Sicherstellung von Spannkräften noch verbessert ist.

Diese Aufgabe wird mit einer Spanneinheit, insbesondere zur Verwendung in einem Bearbeitungszentrum bzw. einem Dreh- bzw. Fräszentrum gelöst, wobei die Spanneinheit ein Außengehäuse von vorzugsweise zylindrischer Grundform, ein im Außengehäuse aufgenommenes Innengehäuse sowie einen im Innengehäuse in einer im Betriebszustand vertikalen Stellrichtung A verstellbar gehaltenen Innenzylinder, der dazu ausgebildet ist, eine Druck- oder Zugkraft zu Spannzwecken zu übertragen, umfasst, wobei sich das Innengehäuse über Federn gegen das Außengehäuse abstützt und in Stellrichtung A gegenüber dem Außengehäuse verschieblich gelagert ist und so einen Federkraftspeicher ausbildet, wobei innerhalb der Spanneinheit integriert, vorzugsweise vom Außengehäuse umschlossen, weiter vorzugsweise innerhalb des Innengehäuses aufgenommen, Getriebemittel angeordnet sind, um, angetrieben von einer Antriebsvorrichtung, den Innenzylinder mit einer Kraft in Stellrichtung A zu beaufschlagen, und wobei sich das Innengehäuse über eine Mehrzahl von Federn unterschiedlicher Bauart, insbesondere über ein oder mehrere Spiralfedern und über ein oder mehrere Gasdruckfedern am Außengehäuse abstützt.

Nach einer Kernüberlegung der vorliegenden Erfindung wird insofern einerseits ein Federkraftspeicher dadurch realisiert, dass sich ein verschiebliches Innengehäuse über Federn gegen das Außengehäuse der Spanneinheit abstützt und dabei in Stellrichtung A gegenüber dem Außengehäuse verschieblich gelagert ist und weiterhin Getriebemittel innerhalb der Spanneinheit, vorzugsweise innerhalb des Innengehäuses integriert angeordnet sind, um, angetrieben von einer Antriebsvorrichtung, den Innenzylinder mit einer Kraft in Stellrichtung A zu beaufschlagen. Die Antriebsvorrichtung treibt die Getriebemittel an, und kann ebenfalls in die Spanneinrichtung integriert oder außerhalb der Spanneinheit angeordnet sein. Durch diese Kombination wird eine universell einsetzbare, zuverlässig und einfach zu bedienende Spanneinheit geschaffen, die beispielsweise in einem Bearbeitungszentrum bzw. einem Dreh- bzw. Fräszentrum eingesetzt werden kann. In dieser Bauart werden die Federcharakteristika der genannten Federn unterschiedlicher Bauart in synergistischer Weise miteinander kombiniert. Während eine Spiralfeder bei geringer Verstellbewegung nur eine geringe Gegenkraft, hingegen bei hohen Verstellwegen eine hohe Gegenkraft bereitstellt, wird von einer Gasdruckfeder bereits bei nur geringen Verstellwegen eine relativ hohe Gegenkraft erzeugt. Überlagert man nun die Federcharakteristika beider Federn unterschiedlicher Bauart, indem man sie von ihrer Wirkungsweise her, also funktionell betrachtet parallel zueinander, etwa nebeneinanderliegend, einsetzt, so ergibt sich eine Gesamtfedercharakteristik, die auch schon bei geringen Verstellwegen eine relativ hohe Gegenkraft bereitstellt, diese Gegenkraft aber bei höheren Verstellwegen sogar noch - aufgrund der dann einsetzenden Wirkung der Spiralfedern - ansteigt. Die erfindungsgemäße Kombination von Spiral- und Gasdruckfedern bietet den Vorteil, dass, wenn die Spanneinheit "Nachspannen" muss, bei geringen eingestellten Kräften die Spannkraft über den Nachspannweg nicht, oder nur sehr geringfügig, abnimmt. Unter einem "Nachspannen" ist in diesem Zusammenhang insbesondere ein Aufbringen einer Spannkraft aus einem Federkraftspeicher zu verstehen, wenn, beispielsweise aufgrund von Vibrationen oder einer geringfügigen Deformation eines eingespannten Werkstücks während der Bearbeitung, eine geringfügige Verschiebung des Innenzylinders auftritt, die als "Nachspannweg" bezeichnet wird. Insbesondere bei kleinen eingestellten Spannkräften, beispielsweise wegen eines deformationsempfindlichen Werkstücks, kann durch die erfindungsgemäße Kombination von Spiral- und Gasdruckfedern, insbesondere durch die Charakteristik einer Gasdruckfeder, eine Lockerung der Einspannung oder sogar ein Loslösen des Werkstücks verhindert werden.

In einer bevorzugten Ausgestaltung umfassen die Getriebemittel einen Hülsengewindetrieb oder einen Planetenrollengewindetrieb, um eine Drehbewegung der Antriebsvorrichtung in eine axiale Beaufschlagung des Innenzylinders zu übertragen. In einer weiteren möglichen Ausgestaltung umfassen die Getriebemittel ein Schneckengetriebe mit einer antriebsseits vorgesehenen Schnecke und einem abtriebsseitig vorgesehenen Schneckenrad.

Besonders bevorzugt wird eine Ausgestaltung, in der das Schneckenrad drehmomentschlüssig mit einem mit Innengewinde versehenen ersten Teilelements des Hülsengewindetriebs oder des Planetenrollengewindetriebs verbunden ist, insbesondere einstückig mit diesem ausgebildet ist.

Über ein Schneckengetriebe lässt sich bekanntermaßen eine hohe Übersetzung bewirken. Wenn das Schneckengetriebe gleichzeitig mit dem Hülsengewindetrieb oder dem Planetenrollengewindetrieb verzahnt ist, also das Schneckenrad an einer äußeren Umfangsfläche des ersten Teilelements des Hülsengewindetriebs oder des Planetenrollengewindetriebs ausgebildet ist, lässt sich mit wenigen Bauteilen eine Drehbewegung einer Antriebsvorrichtung in eine Axialbewegung des Innenzylinders umwandeln.

In einer konkreten, möglichen Ausgestaltung umfasst das Schneckenrad eine umlaufende obere Lagerfläche sowie eine umlaufende untere Lagerfläche, über die es sich, vorzugsweise über Kugeln, gegenüber dem Innengehäuse in radialer und/oder axialer Richtung abstützt.

Damit die Spanneinheit relativ flachbauend ausgebildet werden kann, wird es bevorzugt, wenn die Antriebsvorrichtung eine Abtriebswelle aufweist, die orthogonal zur Stellrichtung A des Innenzylinders ausgerichtet ist.

Aus ähnlichen Überlegungen wird es, wenn ein Schneckengetriebe vorgesehen wird, bevorzugt, auch die Schnecke in einer zur Stellrichtung A orthogonal verlaufenden Achse S auszurichten.

Schließlich kann es im Hinblick auf eine kompakte Ausgestaltung der Spanneinheit vorteilhaft sein, wenn ein Schneckengetriebe vorgesehen wird, die Schnecke nicht unmittelbar axial mit der Abtriebswelle der Antriebsvorrichtung zu verbinden, sondern die Schnecke orthogonal zur Abtriebswelle der Antriebsvorrichtung anzuordnen. Eine drehmomentschlüssige Übertragung der Drehbewegung der Abtriebswelle auf die Schnecke kann beispielsweise über ein dazwischen angeordnetes Zahnradgetriebe erfolgen.

In einer weiteren möglichen, bevorzugten Ausgestaltung weist der Innenzylinder zumindest einen Abschnitt, vorzugsweise einen distalen Abschnitt mit einer von der Rotationsform abweichenden Querschnittsform, insbesondere mit elliptischer Querschnittsform auf, um den Innenzylinder relativ zum Außengehäuse drehfest festzulegen. Konkret kann der Innenzylinder mit elliptischer Querschnittsform beispielsweise durch eine Öffnung im Außengehäuse mit entsprechend elliptischer Querschnittsform geführt sein, so dass hierdurch die gewünschte drehfeste Festlegung bewirkt wird.

In einer fakultativ möglichen Ausgestaltung ist eine Arretiereinrichtung vorgesehen, um die Getriebemittel bedarfsweise, insbesondere in Ruhestellung der Antriebsvorrichtung zu arretieren.

Zwar kann bei entsprechender Ausgestaltung des Schneckengetriebes bereits eine Arretierung durch das Schneckengetriebe selbst gegeben sein, aus Sicherheitsgründen oder bei einer keine Arretierung bewirkenden Ausgestaltung des Schneckengetriebes, bewirkt die Arretierung insbesondere in Ruhestellung der Antriebsvorrichtung aber mit besonders hoher Zuverlässigkeit, dass eine erzeugte und im Federkraftspeicher aufgenommene Spannkraft nicht durch unerwünschte Rückstellung der Getriebemittel verloren geht.

In einer konkreten Ausgestaltung kann die Arretiereinrichtung einen axial verlagerbaren Stift umfassen, der über eine Betätigungseinrichtung mit einer Arretierausnehmung im zugeordneten Getriebemittel, insbesondere in einem Wellenfortsatz der Schnecke in Eingriff bzw. außer Eingriff bringbar ist. Ein derartiger axial verlagerbarer Stift bewirkt eine sichere Arretierung, da er lediglich in Arretierposition gehalten, nicht aber dauerhaft mit einer Haltekraft beaufschlagt werden muss. Die Betätigungseinrichtung zur Verlagerung des axial verlagerbaren Stifts kann als elektromagnetischer Aktuator ausgebildet sein, der den Stift von einer ersten Position in eine zweite Position bzw. von einer zweiten Position in eine erste Position verlagern kann. Ggf. kann der axial verlagerbare Stift auch durch eine Feder in Richtung auf die Arretierposition beaufschlagt sein derart, dass lediglich bei Betätigung der Antriebsvorrichtung bzw. der Getriebemittel die Betätigungseinrichtung angesteuert wird, um den axial verlagerbaren Stift entgegen der Federbeaufschlagung aus der Arretierposition in eine Freigabeposition zu überführen. Sobald die Verstellbewegung des Spannzylinders über die Antriebsvorrichtung und die Getriebemittel abgeschlossen ist, kann die Betätigungseinrichtung den Stift wieder unter Wirkung der genannten Feder in die Arretierposition zurückgleiten lassen.

In einer möglichen, bevorzugten Ausgestaltung sind weiterhin Arretiersensormittel vorgesehen, um zu überprüfen, ob die Arretiereinrichtung in Arretierstellung ist. Konkret kann, wenn die Arretiereinrichtung einen axial verlagerbaren Stift umfasst, durch die Arretiersensormittel überprüft werden, in welcher Position sich der axial verlagerbare Stift befindet.

In einer weiteren fakultativen Ausgestaltung sind Sensoreinrichtungen vorgesehen, die ausgebildet und bestimmt sind, die Verstellposition des Innengehäuses innerhalb des Außengehäuses und dadurch indirekt die im Federkraftspeicher vorgehaltene Gegenkraft anzuzeigen oder zu erfassen.

Weiterhin können noch Sensoreinrichtungen vorgesehen sein, die ausgebildet und bestimmt sind, die Drehbewegungder Antriebsvorrichtung, der Antriebswelle und/oder der Getriebemittel, insbesondere die jeweilige Umdrehungszahl, zu erfassen.

Weiterhin ist in einer bevorzugten Ausgestaltung das Innengehäuse derart ausgebildet, dass es ein Gehäusegrundelement sowie einen Gehäusedeckel umfasst, die über lösbare Verbindungselemente aneinander befestigt sind. In dieser Ausgestaltung wird es besonders einfach, die Spanneinheit, insbesondere das Innengehäuse mit den darin aufgenommenen bzw. gelagerten Komponenten, wie Schneckengetriebe, Hülsengewindetrieb mit darin aufgenommenem Innenzylinder, Antriebsvorrichtung mit Zahnradgetriebe und Federn zu montieren.

In einer möglichen Ausgestaltung umfasst die Antriebsvorrichtung eine motorische Antriebseinheit, insbesondere einen Elektromotor oder einen Hydraulikmotor. Eine motorische Antriebseinheit hat den Vorteil, dass eine Stellkraft auf den Innenzylinder automatisch, insbesondere über eine Steuerung automatisiert, aufgebracht werden kann. Eine motorische Antriebsvorrichtung könnte in die Spanneinheit integriert, oder außerhalb der Spanneinheit angeordnet sein. Im Falle eines Hydraulikmotors, der beispielsweise in der Bauform eines Axialkolbenmotors, eines Radialkolbenmotors, oder eines Zahnradmotors ausgeführt sein könnte, könnte ein in einem Bearbeitungszentrum bzw. einem Dreh- bzw. Fräszentrum ohnehin vorhandenes Hydrauliksystem einfach genutzt werden, um den Motor über Hydraulikleitungen mit einem Druckfluid zu versorgen.

Alternativ umfasst die Antriebsvorrichtung eine manuelle Antriebseinheit, beispielsweise einen Drehbetätigungsabschnitt bzw. ein Ansatzelement für einen Spannschlüssel. Eine manuelle Antriebseinheit hat den Vorteil, dass sie kostengünstig ist und einfach den Anforderungen des jeweiligen Spannvorgangs entsprechend von einem Bediener betätigt werden kann. Eine manuelle Antriebseinheit könnte in Form eines Drehbetätigungsabschnitts, beispielsweise mit einem Griffelement, der/das aus der Spanneinheit herausragt und fest mit einer Abtriebswelle verbunden bzw. einteilig mit dieser ausgeführt ist, vorgesehen sein. Eine manuelle Antriebseinheit könnte aber auch in Form eines Ansatzelements für einen Spannschlüssel, beispielsweise einen Vierkant- oder Sechskantschlüssel, oder ein sonstiges Werkzeug das geeignet ist, im Eingriff mit dem Ansatzelement manuell eine Drehbewegung auf eine Abtriebswelle aufzubringen und nach einem Spannvorgang abgezogen zu werden, vorgesehen sein.

In einer möglichen Ausgestaltung ist die Antriebsvorrichtung innerhalb der Spanneinheit integriert, vorzugsweise vom Außengehäuse umschlossen, weiter vorzugsweise innerhalb des Innengehäuses aufgenommen, angeordnet. Dies hat den Vorteil einer besonders kompakten Bauform der Spanneinheit. Im Falle einer motorischen Antriebsvorrichtung könnte beispielsweise ein Elektromotor oder ein Hydraulikmotor in die Spanneinheit integriert sein, sodass die Spanneinheit auch rotierend eingesetzt werden könnte. Eine Stromversorgung könnte im Falle eines integrierten Elektromotors dann über Schleifkontakte realisiert werden. Eine Versorgung mit Druckfluid könnte im Falle eines Hydraulikmotors über hydraulische Drehzuführungen realisiert werden. Alternativ wäre es möglich, eine integrierte motorische Antriebsvorrichtung nur in nicht-rotierendem Betriebszustand der Spanneinheit, beispielsweise an eine Strom- bzw. Hydraulikversorgung, anzuschließen, da Spannvorgänge ohnehin nur in einem nicht-rotierenden Betriebszustand durchgeführt werden. Im Falle einer integrierten manuellen Antriebsvorrichtung könnte die Spanneinheit ebenfalls rotierend eingesetzt werden. Beispielsweise könnte dafür ein Ansatzelement für ein Spannwerkzeug in der Spanneinheit integriert sein, beispielsweise in Form eines Eingriffsprofils für einen Spannschlüssel an einer Abtriebswelle, wobei der Spannschlüssel für einen Spannvorgang über eine Zugangsöffnung von außen in die Spanneinheit eingeführt werden könnte.

In einer alternativen Ausgestaltung ist eine Abtriebswelle der Antriebsvorrichtung in die Spanneinheit hineinragend, vorzugsweise durch das Außengehäuse hindurchragend, weiter vorzugsweise bis in das Innengehäuse hineinragend, vorgesehen. Eine solche Abtriebswelle kann mehrteilig ausgeführt sein. Auf diese Weise kann eine außerhalb der Spanneinheit angeordnete Antriebsvorrichtung, die also insbesondere nicht vollständig in die Spanneinheit integriert ist, über die Abtriebswelle mit den Getriebemitteln verbunden sein, um eine Stellkraft auf den Innenzylinder auszuüben. Auf diese Weise können kostengünstig beliebige Antriebsvorrichtungen, insbesondere motorisch oder manuell betriebene Antriebsvorrichtungen, genutzt werden, ohne auf eine besonders kompakte Bauform der Antriebsvorrichtung achten zu müssen.

In einer weiterführenden Ausgestaltung umfasst die Abtriebswelle eine Kopplungseinrichtung, über die die Getriebemittel von einer Antriebsvorrichtung, die außerhalb der Spanneinheit angeordnet ist, angetrieben werden. Insbesondere kann die Kopplungseinrichtung einen Flansch umfassen. Auf diese Weise können vorteilhaft beliebige motorische oder manuelle Antriebsvorrichtungen mit der Spanneinheit verbunden werden und bei Bedarf ausgetauscht werden.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Figur 1: eine Ausführungsform der erfindungsgemäßen Spanneinheit in perspektivischer Ansicht.
- Figur 2: die Spanneinheit nach Figur 1 in Draufsicht.
- Figur 3: eine Schnittansicht durch die Spanneinheit nach Figur 2 entlang der Linie III-III in Figur 2.
- Figur 3a: eine Detailansicht aus Figur 3.
- Figur 4a: eine Ausführungsform mit einem integrierten Elektromotor in einer Schnittansicht entlang der Linie IV-IV in Figur 3.
- Figur 4b: eine Ausführungsform mit einem integrierten Hydraulikmotor in einer Schnittansicht entlang der Linie IV-IV in Figur 3.
- Figur 4c: eine Ausführungsform mit einer in die Spanneinheit hineinragenden Abtriebswelle einer manuellen Antriebsvorrichtung in einer Schnittansicht, die einer Schnittansicht entlang der Linie IV-IV in Figur 3 entspricht.
- Figur 5: ein Diagramm zur Veranschaulichung der nach einem weiteren Aspekt der vorliegenden Erfindung parallel zueinander wirksamer Federn unterschiedlicher Bauart, die sich hinsichtlich ihrer Federcharakteristik überlagern.

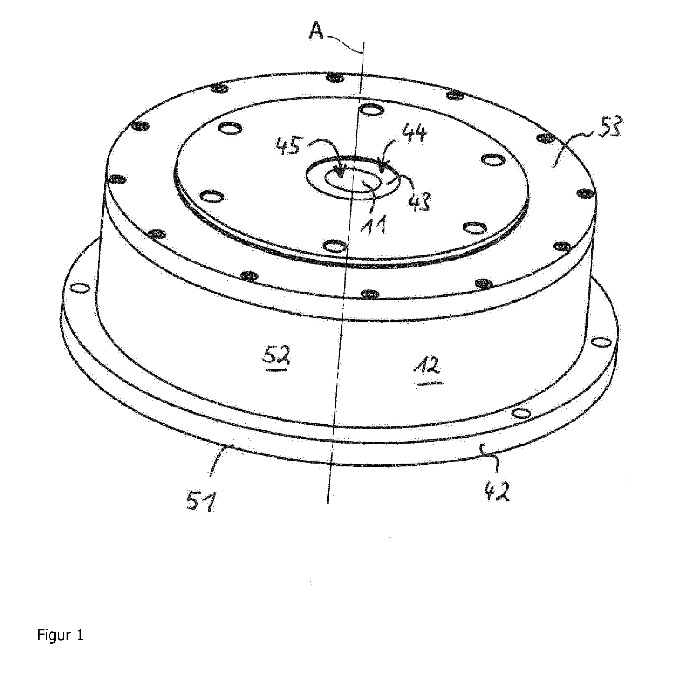

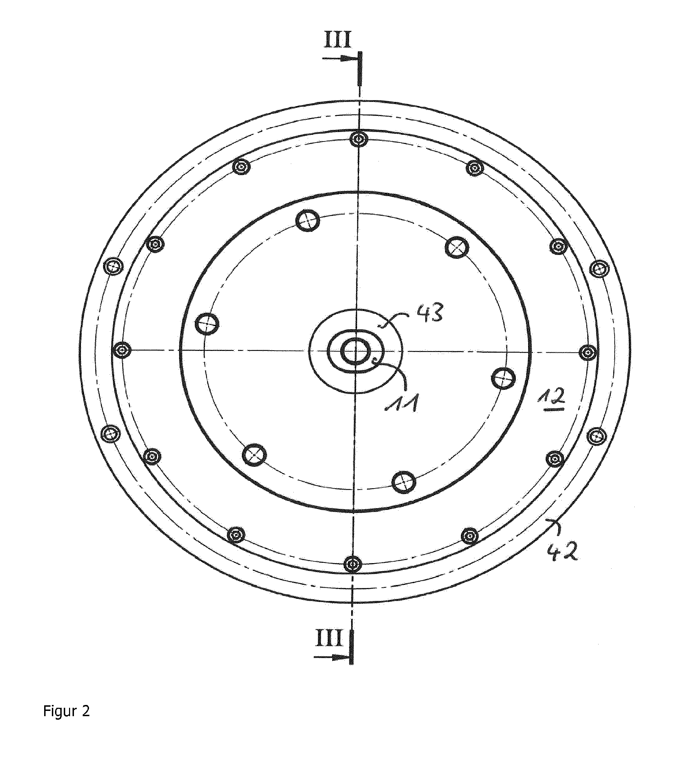

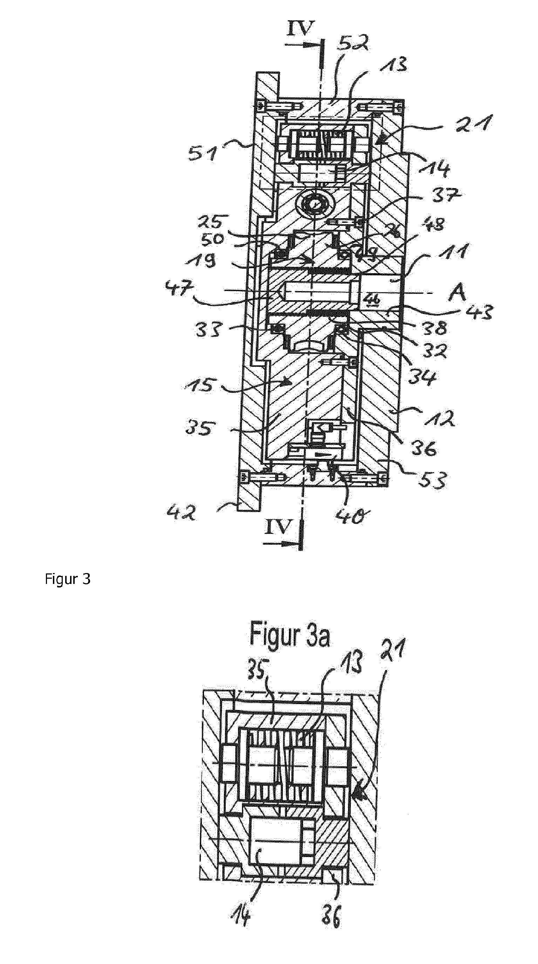

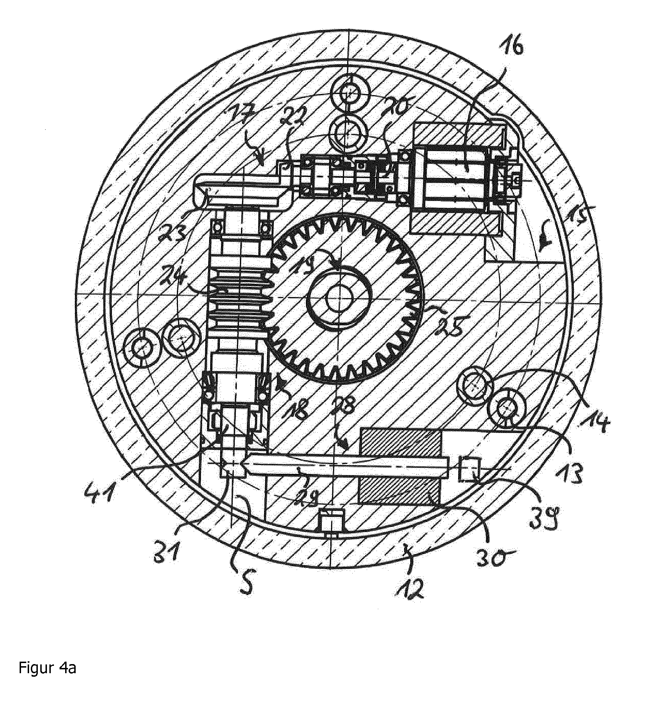

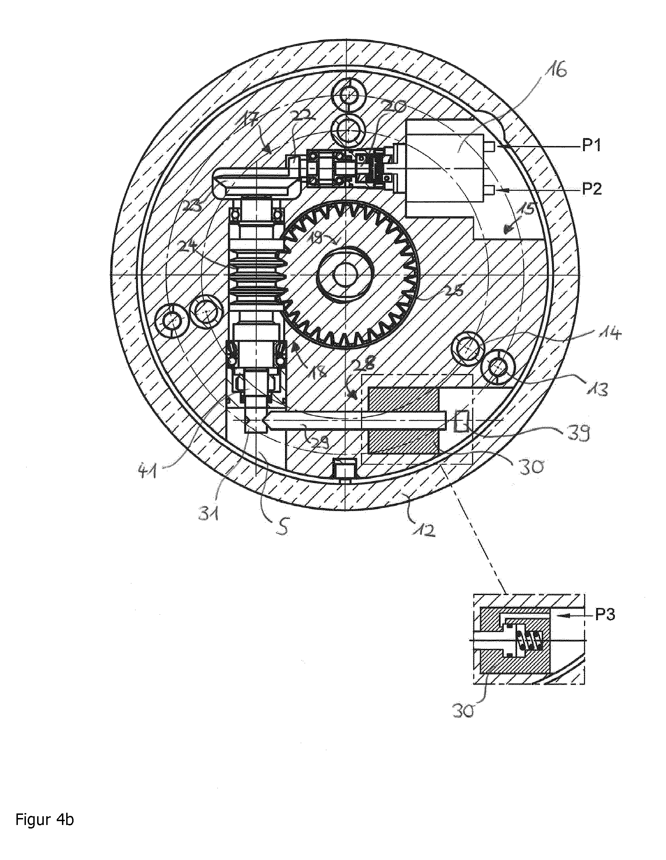

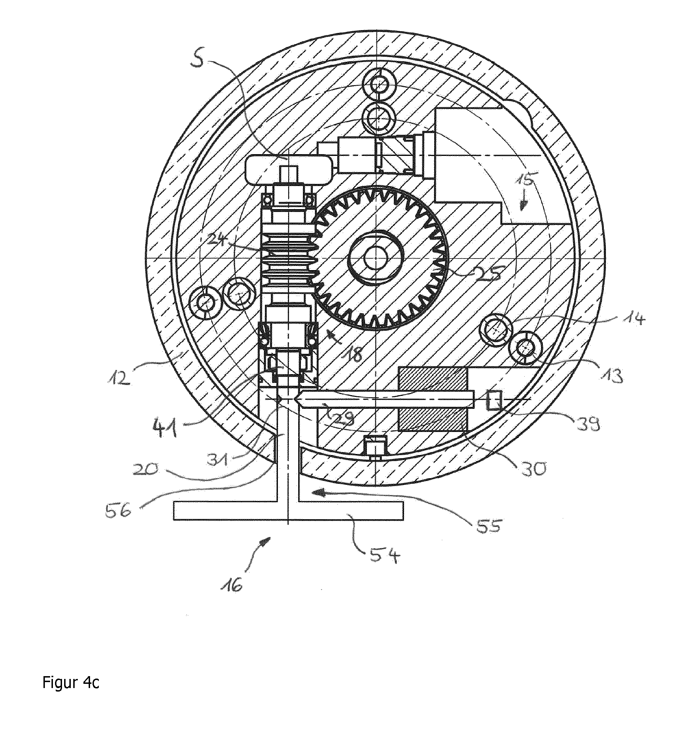

In Figur 1 ist eine perspektivische Ansicht einer Ausführungsform einer erfindungsgemäßen Spanneinheit und in Figur 2 eine Draufsicht auf diese Ausführungsform veranschaulicht. Die Spanneinheit umfasst zunächst ein aus einem unteren Außengehäuseelement 51, einem mittleren Außengehäuseelement 52 sowie einem oberen Außengehäuseelement 53 zusammengesetztes Außengehäuse 12. Das untere Außengehäuseelement 51 bildet an seiner Unterseite einen Befestigungsflansch 42 aus. Am oberen Außengehäuse 53 ragt ein oberer Halsabschnitt 43 eines Innengehäuses 15 (vgl. hierzu Figuren 3 und 4) in eine Öffnung 44 des oberen Außengehäuseelements 53 bzw. des Außengehäuses 12. Der Halsabschnitt 43 des Innengehäuses 15 definiert ebenfalls eine Öffnung 45 mit einer im Wesentlichen elliptischen Querschnittsform. In dieser Öffnung 45 ist ein Innenzylinder 11 geführt, der in seinem distalen oberen Abschnitt eine an die elliptische Form der Öffnung 45 angepasste, ebenfalls elliptische Querschnittsform aufweist.

In Figur 3 ist eine Schnittansicht entlang der Linie III-III in Figur 2 dargestellt. Aus dieser Schnittansicht wird ersichtlich, wie das Innengehäuse 15 im Außengehäuse 12 aufgenommen ist. Konkret stützt es sich über Federn 13, 14 unterschiedlicher Bauart, nämlich konkret über eine Mehrzahl von Spiralfedern 13 sowie eine Mehrzahl von Gasdruckfedern 14 (vgl. hierzu auch Figuren 4a bis 4c) am Außengehäuse 12 ab derart, dass das Innengehäuse in Verstellrichtung A, allerdings jeweils gegen die durch die Federn 13, 14 bereitgestellte Gegenkraft, verschieblich gelagert ist. Durch die verschiebliche Lagerung des Innengehäuses 15 im Außengehäuse 12 unter Überwindung der von den Federn 13, 14 bereitgestellten Gegenkraft wird ein Federkraftspeicher 21 definiert.

Um das Innengehäuse 15 im Außengehäuse 12 entlang der Verstellrichtung A zu führen, können Führungen bereitgestellt sein, wobei in der vorliegenden Ausführungsform die Führung durch den bereits erwähnten Halsabschnitt 43 innerhalb der Öffnung 44 des Außengehäuses 12 definiert ist.

Innerhalb des Innengehäuses 15 ist der bereits erwähnte Innenzylinder 11, der in Stellrichtung A verstellbar ausgebildet ist, gelagert. Der Innenzylinder 11 ist bei der vorliegenden Ausführungsform mehrteilig ausgebildet und weist einen ersten oberen Abschnitt 46 sowie einen zweiten unteren Abschnitt 47 auf.

Am ersten oberen Abschnitt 46 ist der Innenzylinder 11 mit dem bereits erwähnten elliptischen Querschnitt ausgestaltet. Der zweite untere Abschnitt 47 des Spannzylinders weist hingegen einen kreisrunden Querschnitt und an seinem Außenumfang zumindest abschnittsweise ein Außengewinde 48 auf. Erster Abschnitt 46 und zweiter Abschnitt 47 können lösbar, insbesondere über eine Schraubverbindung oder auf andere geeignete Weise miteinander verbunden werden. Alternativ ist es auch möglich, den ersten, oberen Abschnitt 46 und zweiten, unteren Abschnitt 47 einstückig miteinander verbunden auszubilden.

Das am zweiten, unteren Abschnitt 47 vorgesehene Außengewinde 48 greift in ein entsprechend ausgestaltetes Innengewinde 38 eines Schneckenrades 25, das insofern ein erstes Teilelement eines Hülsengewindetriebs 19 bildet, ein. Der mit Außengewinde 48 versehene zweite, untere Abschnitt 47 bildet dementsprechend ein zum ersten Teilelement des Hülsengewindetriebs 19 korrespondierendes zweites Teilelement. Das Schneckenrad 25 weist an seinem Außenumfang eine Schneckenverzahnung auf, die mit einer Schnecke 24 eines Schneckengetriebes 18 zusammenwirkt. Um das Schneckenrad 25 in axialer und radialer Richtung innerhalb des Innengehäuses 15 zu stabilisieren, weist das Schneckenrad 25 eine obere Lagerfläche 32 sowie eine untere Lagerfläche 33 auf, über die es sich über Kugeln 34 an entsprechenden Lagerflächen 49, 50 des Innengehäuses 15 abstützt.

Aus der Schnittansicht nach Figur 3 wird auch deutlich, dass das Innengehäuse 15 mehrteilig ausgebildet ist, nämlich in der vorliegenden Ausgestaltung konkret ein Gehäusegrundelement 35 sowie einen Gehäusedeckel 36 umfasst, wobei Gehäusegrundelement 35 und Gehäusedeckel 36 über Verbindungselemente 37, insbesondere Verbindungsschrauben, aneinander befestigt sind. Durch diesen Aufbau wird eine einfache Montierbarkeit der Spanneinheit gewährleistet. Es können nämlich im Montagevorgang die verschiedenen Einzelkomponenten, wie beispielsweise das mit dem Innenzylinder 11 versehene Schneckenrad 25, die Federn 13, 14, sowie die weiteren anhand von Figur 4a näher beschriebenen Komponenten in das Gehäusegrundelement 35 eingesetzt und mindestens teilweise bereits durch Fixierung des Gehäusedeckels 36 fixiert werden, wie beispielsweise zumindest die Federn 13, 14 und das Schneckenrad 25.

Unter Bezugnahme auf Figur 4a wird ersichtlich, dass im Innengehäuse 15 eine Antriebsvorrichtung 16 angeordnet ist, die über eine Abtriebswelle 20 eine Drehbewegung auf ein Zahnradgetriebe 17 überträgt. Die Antriebsvorrichtung 16 ist hier als in die Spanneinheit integrierter Elektromotor ausgeführt. Das Zahnradgetriebe 17 umfasst ein antriebsseitiges Zahnrad 22 sowie ein abtriebsseitiges Zahnrad 23, das drehmomentschlüssig mit der Schnecke 24 des Schneckengetriebes 18 verbunden ist. Die Schnecke 24 greift in das bereits erwähnte Schneckenrad 25 ein und versetzt dieses bei Betätigung der Antriebsvorrichtung 16 in eine Drehbewegung. Alternativ wäre es auch denkbar, den Elektromotor außerhalb der Spanneinheit anzuordnen, beispielsweise so, dass seine Abtriebswelle 20 in die Spanneinheit hineinragt, um die Schnecke 24 und die Getriebemittel 18 anzutreiben. Die Schnecke 24 kann derart ausgebildet sein, dass sie selbsthemmend wirkt, d.h. auch bei einer vom Innenzylinder 11 auf den Hülsengewindetrieb 19 übertragenen Axialkraft eine Drehbewegung des Schneckenrads 25 verhindert wird. Alternativ oder zusätzlich kann aber auch eine Arretiereinrichtung 28 mit einer hier elektromagnetisch arbeitenden Betätigungseinrichtung 30 vorgesehen sein. In der Betätigungseinrichtung 30 ist ein axial verlagerbarer Stift 29 gelagert, der entlang seiner Längsachse von der in den Figuren 4a bis 4c gezeigten Blockierstellung in eine zurückgezogene Position und vice versa überführbar ist. In der in den Figuren 4a bis 4c gezeigten Blockierstellung greift der axial verlagerbare Stift 29 in eine Ausnehmung in einen Wellenfortsatz 31, der drehmomentschlüssig mit der Schnecke 24 verbunden ist, ein und blockiert somit die Getriebemittel 17 bis 19, insbesondere die Schnecke 24.

Weiterhin sind Arretiersensormittel 39 vorgesehen, über die feststellbar ist, ob sich der axial verlagerbare Stift 29 in Arretierposition oder in zurückgezogener Position befindet.

Nachfolgend soll nun noch ein Spannvorgang beschrieben werden, wobei unter einem Spannvorgang sowohl eine axiale Verstellung des Innenzylinders 11 in Stellrichtung A bzw. entgegen der Stellrichtung A als auch eine Verschiebung des Innengehäuses 15 unter Beaufschlagung der Federn 13, 14 zur Erzeugung einer im so definierten Federkraftspeicher 21 vorgehaltenen Federkraft verstanden werden soll: Wird die Antriebsvorrichtung 16 in Drehbewegung versetzt, treibt die Abtriebswelle 20 über das Zahnradgetriebe 17 die Schnecke 24 des Schneckengetriebes 18 an, die ihre Drehbewegung auf das Schneckenrad 25 und damit auf den Hülsengewindetrieb 19 überträgt. Durch Drehung des ersten Teilelements des Hülsengewindetriebs 19 relativ zum zweiten Teilelement des Hülsengewindetriebs 19 wird der Innenzylinder 11 axial versetzt, beispielsweise in eine Richtung aus dem Außengehäuse 12 heraus. Trifft der Innenzylinder 11 auf eine Gegenkraft, beispielsweise wenn die Spanneinheit mit einem aufgesetzten Spannfutter zusammenwirkt und ein Werkstück bereits an Spannbacken des Spannfutters anliegt, bewirkt eine weitere Beaufschlagung des Innenzylinders 11, dass die Kraft, mit der das Werkstück eingespannt ist, erhöht wird. Dabei bewirkt nun eine weitere Kraftbeaufschlagung des Innenzylinders 11 nach außerhalb des Innengehäuses 15, dass das Innengehäuse 15 sich innerhalb des Außengehäuses 12 gegen die Wirkung der Federn 13, 14 in entgegengesetzter Richtung verlagert und so im Federkraftspeicher 21 eine Gegenkraft erzeugt wird. Über Sensoreinrichtungen 40 ist die Verschiebebewegung des Innengehäuses 15 relativ zum Außengehäuse 12 erfassbar und damit indirekt auch die im Federkraftspeicher 21 eingestellte Gegenkraft. Ist ein gewünschter Kraftwert erreicht, wird die Antriebsvorrichtung 16 stillgesetzt und die Getriebemittel 17 bis 19 werden blockiert, entweder durch eine durch die Schnecke 24 vorgegebene Selbstarretierung und/oder durch die bereits erwähnten Arretiermittel 28, 29.

Um die Drehbewegungen der Antriebsvorrichtung 16, der Abtriebswelle 20 oder der Getriebemittel 17 bis 19 zu erfassen, können Sensoreinrichtungen 41 vorgesehen sein, die beispielsweise komplette Umdrehungszahlen über eine geeignete Sensorik, beispielsweise unter Ausnützung des Hall-Effekts, erfassen.

Figur 4b zeigt eine Ausführungsform einer erfindungsgemäßen Spanneinheit, die sich von der in Figur 4a gezeigten Ausführungsform dadurch unterscheidet, dass die Antriebsvorrichtung 16 hier als ein in die Spanneinheit integrierter Hydraulikmotor ausgeführt ist. Der Hydraulikmotor kann über einen ersten (P1) bzw. einen zweiten (P2) Hydraulikanschluss über entsprechende Leitungen (nicht dargestellt) mit Druckfluid versorgt werden, wobei an je einen Hydraulikanschluss (P1, P2) eine Zu- bzw. eine Ableitung für Druckfluid angeschlossen sein kann. Über einen dritten Hydraulikanschluss (P3) kann die Arretiereinrichtung 28 hydraulisch betätigt werden.

Figur 4c zeigt eine Ausführungsform einer erfindungsgemäßen Spanneinheit mit einer in die Spanneinheit hineinragenden Abtriebswelle 20 einer manuellen Antriebsvorrichtung 16. Diese Ausführungsform unterscheidet sich von den in den Figuren 4a und 4b gezeigten Ausführungsformen dadurch, dass die Getriebemittel (18, 19) statt durch die Abtriebswelle einer motorischen Antriebsvorrichtung durch die Abtriebswelle 20 einer manuell betätigbaren Antriebsvorrichtung 16 angetrieben werden. Die Abtriebswelle 20 geht hier direkt in den Wellenfortsatz 31 über. Die Antriebsvorrichtung 16 ist außerhalb der Spanneinheit bzw. des Außengehäuses 12 angeordnet. Dabei entfällt durch die koaxiale Ausrichtung der Abtriebswelle 20 mit der Achse S der Schnecke 24 in der gezeigten Ausführungsform das Zahnradgetriebe 17. Eine orthogonale Ausrichtung der Abtriebswelle 20 zur Schneckenachse S mit einem zwischengeschalteten Zahnradgetriebe 17, wie im Zusammenhang mit den Figuren 4a und 4b beschrieben, ist aber ebenfalls möglich. Hier ist ein Drehbetätigungsabschnitt 55 mit einem Griffelement 54 zur manuellen Einleitung einer Drehbewegung einteilig mit der Abtriebswelle 20 ausgebildet. Die Abtriebswelle 20 ragt durch eine Durchgangsöffnung 56 in dem Ausßengehäuse 12 in die Spanneinheit hinein. Der Drehbetätigungsabschnitt 55 könnte auch als ein separates Element ausgebildet sein, das mit der Abtriebswelle 20 drehschlüssig verbunden ist. Insbesondere könnte der Drehbetätigungsabschnitt 55 durch einen Spannschlüssel ersetzt werden, der in ein passendes Ansatzelement, beispielsweise ein stirnseitiges Eingriffs- oder Mitnahmeprofil, an der Abtriebswelle 20 eingreift und nach einem Spannvorgang durch die Durchgangsöffnung 56 wieder abgezogen werden könnte. Alternativ ist es vorstellbar, das Griffelement 54 durch einen Flansch zu ersetzen, der dann eine Koppeleinrichtung darstellen würde. Über eine Koppeleinrichtung könnte eine beliebige Antriebsvorrichtung 16, die außerhalb der Spanneinheit angeordnet ist, insbesondere ein motorischer oder manueller Antrieb, drehschlüssig an die Abtriebswelle 20 angeflanscht werden, um so die Getriebemittel 18, 19 anzutreiben.

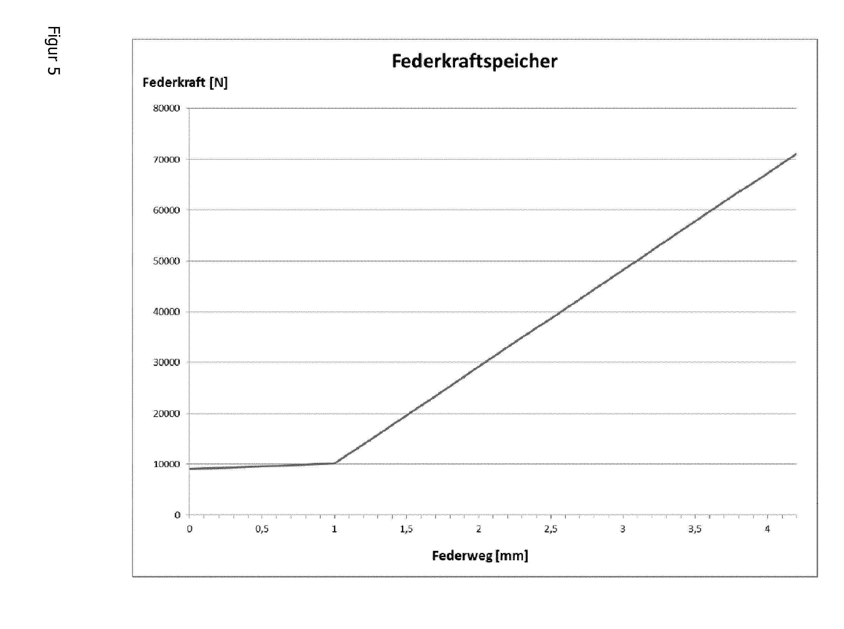

Unter Bezugnahme auf Figur 5 wird veranschaulicht, wie die verschiedenen Federn 13, 14 unterschiedlicher Bauart sich in ihren Federcharakteristika überlagern derart, dass schon bei geringem Verstellweg (Federweg) eine relativ große Gegenkraft (Federkraft) bereitgestellt wird, wobei dies bei geringen Verstellwegen (Federwegen) vorwiegend den Gasdruckfedern geschuldet ist. Bei größeren Verstellwegen (Federwegen) kommen dann die Spiralfedern ins Spiel, so dass sich ab einem gewissen Federweg eine deutlich ansteigende Federkraft ergibt. Es versteht sich von selbst, dass durch geeignete Kombination der Federcharakteristika von Gasdruckfedern und Spiralfedern sich eine gewünschte Federcharakteristik in weitem Maße einstellen lässt.

Die vorgeschlagene Spanneinheit ist äußerst kompakt aufgebaut und ermöglicht, Spannvorgänge schnell, zuverlässig und sicher durchzuführen.

### Bezugszeichenliste

- 11: Innenzylinder
- 12: Außengehäuse
- 13: Feder, Spiralfeder
- 14: Feder, Gasdruckfeder
- 15: Innengehäuse
- 16: Antriebsvorrichtung
- 17: Getriebemittel, Zahnradgetriebe
- 18: Getriebemittel, Schneckengetriebe
- 19: Getriebemittel, Hülsengewindetrieb
- 20: Abtriebswelle (Antriebsvorrichtung)
- 21: Federkraftspeicher
- 22: antriebsseitiges Zahnrad
- 23: abtriebsseitiges Zahnrad
- 24: Schnecke
- 25: Schneckenrad
- 28: Arretiereinrichtung
- 29: axial verlagerbarer Stift
- 30: Betätigungseinrichtung
- 31: Wellenfortsatz
- 32: obere Lagerfläche
- 33: untere Lagerfläche
- 34: Kugeln
- 35: Gehäusegrundelement
- 36: Gehäusedeckel
- 37: Verbindungselemente
- 38: Innengewinde
- 39: Arretiersensormittel
- 40: Sensoreinrichtungen (Federkraftspeicher)
- 41: Sensoreinrichtungen (Antriebsvorrichtung, Getriebemittel)
- 42: Befestigungsflansch
- 43: Halsabschnitt
- 44: Öffnung (Außengehäuse)
- 45: Öffnung (Halsabschnitt des Innengehäuses)
- 46: erster, oberer Abschnitt
- 47: zweiter, unterer Abschnitt
- 48: Außengewinde
- 49, 50: Lagerflächen
- 51: unteres Außengehäuseelement
- 52: mittleres Außengehäuseelement
- 53: oberes Außengehäuseelement
- 54: Griffelement
- 55: Drehbetätigungsabschnitt
- 56: Durchgangsöffnung
- P1: erster Hydraulikanschluss
- P2: zweiter Hydraulikanschluss
- P3: dritter Hydraulikanschluss
- S: Achse der Schnecke

## Patentansprüche

1. Spanneinheit, insbesondere zur Verwendung in einem Bearbeitungszentrum bzw. einem Dreh- bzw. Fräszentrum,
wobei die Spanneinheit ein Außengehäuse (12) von vorzugsweise zylindrischer Grundform, ein im Außengehäuse (12) aufgenommenes Innengehäuse (15) sowie einen im Innengehäuse (15) in einer im Betriebszustand vertikalen Stellrichtung A verstellbar gehaltenen Innenzylinder (11), der dazu ausgebildet ist, eine Druck- oder Zugkraft zu Spannzwecken zu übertragen, umfasst,
wobei sich das Innengehäuse (15) über Federn (13, 14) gegen das Außengehäuse (12) abstützt und in Stellrichtung A gegenüber dem Außengehäuse (12) verschieblich gelagert ist und so einen Federkraftspeicher (21) ausbildet,
wobei innerhalb der Spanneinheit integriert, vorzugsweise vom Außengehäuse (12) umschlossen, weiter vorzugsweise innerhalb des Innengehäuses (11) aufgenommen, Getriebemittel (17-20) angeordnet sind, um, angetrieben von einer Antriebsvorrichtung (16), den Innenzylinder (11) mit einer Kraft in Stellrichtung A zu beaufschlagen,
und wobei sich das Innengehäuse (15) über eine Mehrzahl von Federn (13, 14) unterschiedlicher Bauart, insbesondere über ein oder mehrere Spiralfedern (13) und über ein oder mehrere Gasdruckfedern (14) am Außengehäuse (12) abstützt.

2. Spanneinheit nach Anspruch 1, **dadurch gekennzeichnet, dass** die Getriebemittel einen Hülsengewindetrieb (19) oder einen Planetenrollengewindetrieb umfassen, um eine Drehbewegung der Antriebsvorrichtung (16) in eine axiale Beaufschlagung des Innenzylinders (11) zu übertragen.

3. Spanneinheit nach Anspruch 1 oder 2, **dadurch gekennzeichnet, dass** die Getriebemittel ein Schneckengetriebe (18) mit einer antriebsseits vorgesehenen Schnecke (24) und einem abtriebsseitig vorgesehenen Schneckenrad (25) umfassen.

4. Spanneinheit nach Anspruch 2 oder 3, **dadurch gekennzeichnet, dass** das Schneckenrad (25) drehmomentschlüssig mit einem mit Innengewinde (38) versehenen ersten Teilelement des Hülsengewindetriebs (19) oder des Planetenrollengewindetriebs verbunden ist, insbesondere einstückig mit diesem ausgebildet ist.

5. Spanneinheit nach Anspruch 3 oder 4, **dadurch gekennzeichnet, dass** das Schneckenrad (25) eine umlaufende obere Lagerfläche (32) sowie eine umlaufende, untere Lagerfläche (33) umfasst, über die es sich, vorzugsweise über Kugeln (34) gegenüber dem Innengehäuse (15) in radialer und/oder axialer Richtung abstützt.

6. Spanneinheit nach einem der Ansprüche 1 bis 5, **dadurch gekennzeichnet, dass** die Antriebsvorrichtung (16) eine Abtriebswelle (20) aufweist, die orthogonal zur Stellrichtung A angeordnet ist.

7. Spanneinheit nach einem der Ansprüche 3 bis 6, **dadurch gekennzeichnet, dass** die Schnecke (24) des Schneckengetriebes (18) mit einer zur Stellrichtung A orthogonal verlaufenden Achse S ausgerichtet ist.

8. Spanneinheit nach Anspruch 6 oder 7, **dadurch gekennzeichnet, dass** die Abtriebswelle (20) der Antriebsvorrichtung (16) orthogonal zur Achse S der Schnecke (24) des Schneckengetriebes (18) ausgerichtet ist.

9. Spanneinheit nach einem der Ansprüche 1 bis 8, **dadurch gekennzeichnet, dass** der Innenzylinder (11) zumindest einen Abschnitt, vorzugsweise einen distalen Abschnitt, mit einer von der Rotationsform abweichenden Querschnittsform, insbesondere mit elliptischer Querschnittsform aufweist, um den Innenzylinder (11) relativ zum Außengehäuse (12) drehfest festzulegen.

10. Spanneinheit nach einem der Ansprüche 1 bis 9, **dadurch gekennzeichnet, dass** eine Arretiereinrichtung (28) vorgesehen ist, um die Getriebemittel (17 - 19) bedarfsweise, insbesondere in Ruhestellung der Antriebsvorrichtung (16), zu arretieren.

11. Spanneinheit nach Anspruch 10, **dadurch gekennzeichnet, dass** die Arretiereinrichtung (28) einen axial verlagerbaren Stift (29) umfasst, der über eine Betätigungseinrichtung (30) mit einer Arretierausnehmung (31) im zugeordneten Getriebemittel (17, 18, 19), insbesondere in einem Wellenfortsatz (31) der Schnecke (24) in Eingriff bzw. außer Eingriff bringbar ist.

12. Spanneinheit nach Anspruch 10 oder 11, **dadurch gekennzeichnet,**
- **dass** Arretiersensormittel (39) vorgesehen sind, wobei die Arretiersensormittel (39) ausgebildet und bestimmt sind zu überprüfen, ob die Arretiereinrichtung (28) in Arretierstellung ist, und/oder
- **dass** Sensoreinrichtungen (40) vorgesehen sind, die ausgebildet und bestimmt sind, die Verstellposition des Innengehäuses (15) innerhalb des Außengehäuses (12) und dadurch indirekt die im Federkraftspeicher (21) vorgehaltene Gegenkraft anzuzeigen oder zu erfassen, und/oder
- **dass** Sensoreinrichtungen (41) vorgesehen sind, die ausgebildet und bestimmt sind, die Drehbewegung der Antriebsvorrichtung (16) der Abtriebswelle (20) und/oder der Getriebemittel (17 - 19), insbesondere die jeweilige Umdrehungszahl, zu erfassen.

13. Spanneinheit nach einem der Ansprüche 1 bis 12, **dadurch gekennzeichnet, dass** das Innengehäuse (15) ein Gehäusegrundelement (35) sowie einen Gehäusedeckel (36) umfasst, die über lösbare Verbindungselemente (37) aneinander befestigt sind.

14. Spanneinheit nach einem der Ansprüche 1 bis 13, **dadurch gekennzeichnet, dass** die Antriebsvorrichtung (16) eine motorische Antriebseinheit, insbesondere einen Elektromotor oder einen Hydraulikmotor, oder eine manuelle Antriebseinheit, beispielsweise einen Drehbetätigungsabschnitt bzw. ein Ansatzelement für einen Spannschlüssel, umfasst.

15. Spanneinheit nach einem der Ansprüche 1 bis 14, **dadurch gekennzeichnet, dass** die Antriebsvorrichtung (16) innerhalb der Spanneinheit integriert, vorzugsweise vom Außengehäuse (12) umschlossen, weiter vorzugsweise innerhalb des Innengehäuses (11) aufgenommen, angeordnet ist.

16. Spanneinheit nach einem der Ansprüche 1 bis 14, **dadurch gekennzeichnet, dass** eine Abtriebswelle (20) der Antriebsvorrichtung (16) in die Spanneinheit hineinragend, vorzugsweise durch das Außengehäuse (12) hindurchragend, weiter vorzugsweise bis in das Innengehäuses (11) hineinragend, vorgesehen ist, wobei die Abtriebswelle (20) optional eine Kopplungseinrichtung, insbesondere einen Flansch, umfasst, über die/den die Getriebemittel von einer Antriebsvorrichtung (16), die außerhalb der Spanneinheit (11) angeordnet ist, antreibbar sind.
